# EUROPEAN PATENT APPLICATION

(11) **EP 1 258 960 A2**
(43) Date of publication of application: **20.11.2002**
(21) Application number: 02010738.9
(22) Date of filing: 14.05.2002
(51) Int. Cl.: H02G 1/12

(54) **Method of shearing and tripping electric cables and shearing-stripping machine to carry out the method**

(30) Priority: 15.05.2001 IT VI20010114
(71) Applicant: Samec Divisione Costruzione Macchine Srl, 36015 Schio (VI) (IT)
(72) Inventor: Bernadelle, Roberto, 36030 San Vito di Leguzzano (VI) (IT); Marchioro, Valentino, 36034 Malo (VI) (IT); Casella, Mario, 36015 Schio (VI) (IT)
(74) Representative: Bonini, Ercole

(57) **Abstract**

A method of shearing and stripping electric cables (C) is disclosed, by a single couple of first blades (18, 19) carrying out a first movement to shear the cable and a second opposite movement to incise the sheath. The first blades (18, 19) comprise a couple of plates (20, 21) with planar surfaces (20a, 21a) juxtaposed one close to the other each plate (20, 21) being provided with a cutting member (22, 23) defined by the sharp edge (24, 25) of a through hole (26, 27) made in the plate, into which hole said cable (C) to be shorn and stripped is inserted.

## Description

The present invention relates to a method of shearing and stripping electric cables and a shearing-stripping machine to carry out said method.

It is well known that in order to shear electric cables into sections of different length and to carry out stripping of the ends of the cables and their wires, shearing-stripping machines are used which are carrying out said operations on cables of indefinite length wound as a coil.

According to the prior art the shearing and stripping method generally comprises the steps of unwinding the cable from a coil and introducing the cable into a shearing and stripping unit where said cable is firstly shorn to the desired length and then stripped at the ends which are uncovered for a determined stretch of the outer covering sheaths.

When the cable comprises several wires, these wires are also stripped for a determined stretch so as to uncover the copper wires.

The shearing-stripping machines of the prior art carrying out the above mentioned working method, generally comprise one or more cable driving units and a shearing and stripping unit comprising a plurality of mutually movable blades carrying out shearing of the cable into section of the desired length, stripping of the ends of the cable and possibly also of each wire.

Some known machines available on the market, carry out the shearing and stripping operation through a single couple of juxtaposed blades with open profile that are brought closer to each other to a variable distance whether they should carry out the shearing or the stripping operation.

The machines of this kind have the drawback that the cutting profile of the blades is being worn rather quickly because when shearing the cable, the cutting profile must shear the metal wires of the cable. Consequently, the blades cannot make a precise cut of good quality when they incise the outer plastic sheaths either of the cable or the wires.

Moreover when the same cutting profile is used both for shearing the cable and incising the sheaths, the blades do not work always under the best conditions. Indeed, to make an optimal shearing, it would be necessary to have blades with cutting edges with convergent profile so as to carry out a real shearing of the cable, while to carry out incision of the sheaths it would be necessary to have blades with a generally circular profile matching the outer profile of the cable so as to encompass as much as possible the cable along its entire circumference. In this case, the blades could even be made with different hardness fit for different materials.

As an alternative to the known machines having the mentioned drawbacks, shearing-stripping machines are known trying to solve said problems being provided with more juxtaposed blades arranged transversally to the cable advancement direction, wherein the first couple of blades carries out the cable shearing while the subsequent blades juxtaposed to the shearing blades, carry out incision and stripping of the cable and wire sheaths.

Constructional versions of these machines are also known, wherein the blades are stationary while the cable to be shorn and stripped is being moved under the action of said blades.

The known machines provided with several couples of juxtaposed blades, although they solve the drawbacks shown by the machines provided with a single couple of blades, on the other end have the drawback of a greater constructional difficulty in view of the presence of driving devices that must move the blades or the cable transversally to the cable advancement direction.

Another drawback consist in that the need to move the blades transversally to the cable advancement direction causes a slow down of the cable advancement velocity reducing the machine output.

A further drawback consists in that the blades are mounted overhanging so that during the shearing and stripping operation the blades arranged farther from the cable advancement axes, stress irregularly the blade driving devices. Consequently, these machines have also the drawback of a lower reliability.

The present invention aims at providing a method of shearing and stripping electric cables and a shearing stripping machine to carry out said method, allowing to remove the drawbacks shown by the above mentioned machines of the prior art.

More particularly, a first object of the invention is to provide a shearing stripping machine for electric cables having a single couple of blades having different cutting profiles to carry out the shearing and stripping operations of the cable to be worked.

Another object of the invention is to provide a machine of simpler construction relative to the known machines.

A last but not least object of the invention is to provide a machine having also a greater reliability of operation relative to the known machines.

Said objects are attained by providing a method of shearing and stripping electric cables that according to the main claim comprises the following steps:
- arranging at least a cable to be shorn and stripped inside a shearing stripping unit;
- shearing said cable;
- incising the cable covering sheath at least at one of the ends made by said shearing step;
- stripping said at least an end,
and is characterised in that shearing of said cable and incision of said sheath are made by a single couple of first blades that can be mutually moved in a direction transversal to said cable along two parallel directions with opposed ways, said first blades making a first movement to shear said cable and a second opposite movement to incise said sheath.

The shearing and stripping method of the invention preferably comprises also the steps of:
- incising the sheath covering the wires of said cable;
- and stripping the ends of said wires,
the incision of said sheaths covering said wires being carried out through second blades arranged at opposite sides of said wires and mutually movable along opposite directions of approaching said wires.

Incision of the sheaths covering the wires follows an alignment step to arrange the wires juxtaposed and coplanar to each other.

The shearing stripping machine carrying out the above method comprises a casing on which the following elements are assembled:
- driving means to advance said cable to be shorn and stripped;
- at least a shearing and stripping unit comprising a blade guide body provided with first blades supported by first blade holders for shearing the cable, incising the sheath and stripping said cable, and second blades for incising the sheath and stripping the wires of said cable;
- at least an alignment unit adapted to arrange said wires juxtaposed and coplanar before incision of said sheaths by said second blades;
- first driving means to move said first blades;
- second driving means to move said second blades;
- at least a microprocessor unit controlling and driving said driving and drawing means,
and is characterised in that said first blades comprise a couple of facing plates with planar surfaces each of said plates being provided with a cutting element defined by the sharp edge of a through hole made in each plate, said cable to be shorn and stripped being inserted into said through hole.

Advantageously the machine of the invention allows to carry out the shearing and incision operations of the sheaths in such a way to obtain a better quality of the cuts being effected.

Still advantageously the machine of the invention is also more reliable and safer in comparison with machines of known type carrying out the same operations on the same product.

The foregoing objects and advantages will be better understood from the following description of a preferred embodiment of the invention which is given as an illustrative but non limiting example making reference to the accompanying sheets of drawings in which:
- fig. 1 is a front view of the machine of the invention;
- fig. 2 is a top view of a part of the machine of the invention;
- fig. 3 is a view of part of the machine shown in fig. 1;
- fig. 4 is an enlarged view of the shearing and stripping blades of the machine of the invention;
- figs. 5 and 6 are two different views of the shearing and stripping blades of fig. 4 in the operative position;
- fig. 7 is a cross sectional view of the machine of the invention;
- figs. 8 to 10 show the mutual positions of the blades of the machine shown in fig. 7 when shearing the cable;
- fig. 11 shows the machine of fig. 3 in a different operative stage;
- figs. 12 and 13 are different views of the shearing and stripping blades of the machine of fig. 11;
- figs. 14 to 16 show different positions of the shearing and stripping blades during the stage of incising the cable sheath;
- fig. 17 shows the machine of fig. 11 during the cable stripping stage;
- figs. 18 to 20 show the detail of the blades of the machine of fig. 17 during the stripping operation;
- figs. 21 and 22 show a detail of the machine of fig. 17 in two different operative stages;
- fig. 23 to 26 show details of the machine of fig. 21 in the operative stage;
- fig. 27 is another cross sectional view of the machine of fig. 1;
- fig. 28 shows a detail of the machine of the invention during the incision of the wire sheaths;
- figs. 29 and 30 are two different views of the blades during incision of the sheaths of the cable wires;
- fig. 31 is a detail of the machine of fig. 22 during the wire stripping stage;
- fig. 32 shows the detail of the blades of the machine of fig. 31 during stripping of the cable wires;
- fig. 33 shows the machine of fig. 17 during another working stage;
- figs: 34 and 35 show details of the shearing and stripping blades of the machine of fig. 33;
- fig. 36 shows the incision stage of the cable sheath;
- figs. 37 and 38 show two subsequent moments of the cable stripping stage;
- fig. 39 shows the wire aligning phase;
- fig. 40 shows the aligned wires;
- fig. 41 shows incision of the wire sheaths;
- fig. 42 shows the wire stripping;
- figs. 43, 44 show the outlet cable guide in two different operative positions;
- figs. 45 to 47 are different views of the wire stripping blades; and
- fig. 48 is a detail of fig. 45.

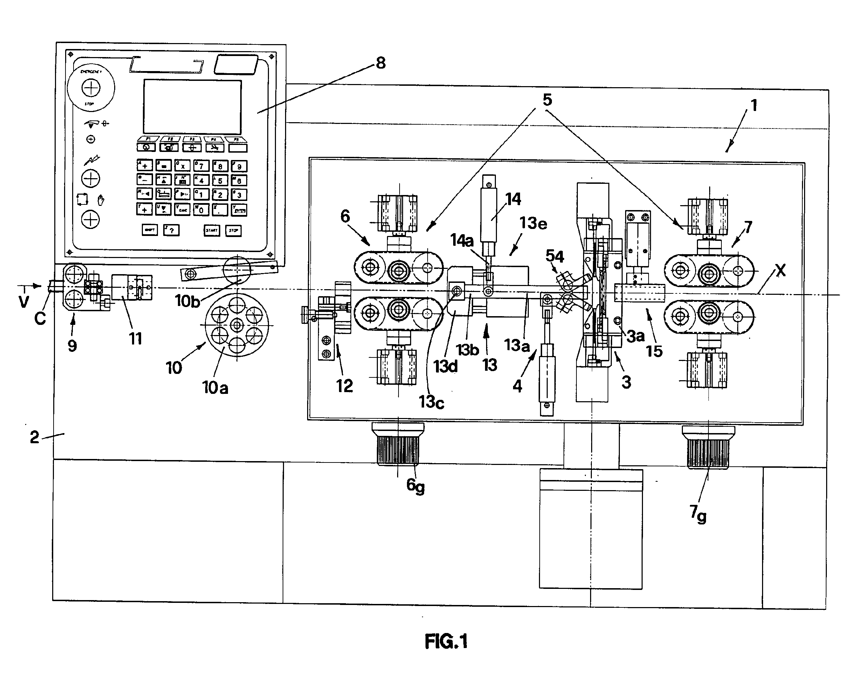

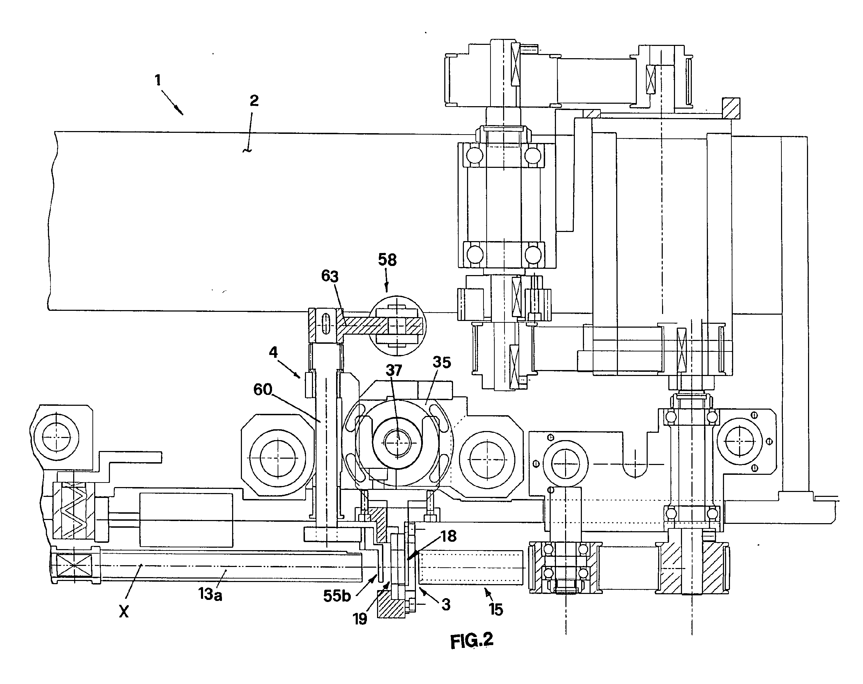

The method of the invention is carried out through a shearing-stripping machine also being subject of the present invention and generally shown in fig. 1 and partially also in fig. 2 where it is generally indicated with reference numeral 1.

The machine comprises a casing 2 on which the following elements are mounted:
- driving means generally indicated with numeral 5 adapted to advance cable C along a longitudinal direction X in the way indicated by arrow V;
- a unit generally indicated with numeral 3 for shearing the cable C and stripping both the cable C and the wires F constituting the cable;
- an alignment unit for the wires F generally indicated with numeral 4 and arranged upstream the shearing and stripping unit 3 to arrange the wires aligned on a generally horizontal plane one aside the other before the stripping operation;
- a microprocessor unit generally indicated with numeral 8 controlling and actuating the advancement, shearing and stripping operations.

More particularly, the driving means 5 comprise:
- a first driving unit generally indicated with numeral 6 advancing the cable C to the alignment unit 4; and
- a second driving unit generally indicated with numeral 7 moving the cable C away from the shearing and stripping unit.

As to said driving means 5 for the cable C, one can see in fig. 1 that the first driving unit 6 is arranged upstream the alignment unit 4 while the second driving unit 7 is arranged downstream the shearing and stripping unit 3.

Each driving unit 6, 7 comprises a couple of superimposed conveyor belts 6a, 6b and 7a, 7b respectively, between which the cable C is arranged adhering to both couples.

Each belt is arranged as a closed loop between a couple of rollers 6c, 6d and 7c and 7d respectively, at least one of which is rotated by driving means not shown in the drawings but of a conventional type.

Moreover, each conveyor belt is associated to actuating means 6e, 6f and 7e, 7f provided with adjusting means 6g, 7g shown in fig. 1, adapted to change the distance between said belts as a function of the diameter of the cable C to be worked.

The shearing-stripping machine comprises also a cable guiding roller inlet 9 followed by a gauging unit 10 arranged upstream the first driving unit 6 and provided with a gauging encoder 10a with corresponding pressure roller 10b.

A microswitch 11 detecting presence or absence of the cable C is arranged before the gauging encoder 10a.

Downstream the gauging unit 10 and just upstream the first driving unit 6 there is an inlet cable guide 12 provided with gauged holes 12a, each hole being adapted to guide a cable C of different diameter.

Immediately downstream the first driving unit 6 there is an intermediate cable guide 13.

The intermediate cable guide 13 comprises a tubular member 13a having an end 13b pivoted through a pin 13c to the movable member 13d of a first actuator 13 fixed to the machine casing 2.

A second actuator 14 also fixed to the casing 2 of the machine, has the movable member 14a connected in an intermediate position to the tubular member 13a.

Therefore, the tubular member 13a through the actuators 13 and 14 may be translated horizontally and also rotated on the pin 13c.

An outlet cable guide 15 is arranged between the shearing and stripping unit 3 and the second driving unit 7.

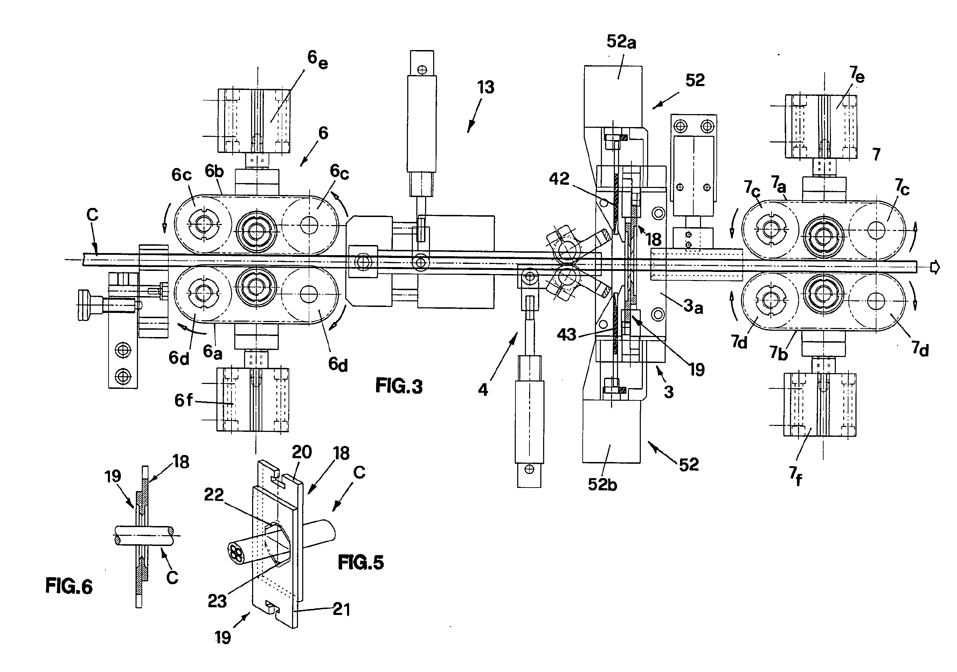

With regard now to the shearing and stripping unit 3 that can be seen in greater detail also in figs. 3, 7, 11 and 17, one can see that it comprises a blade guiding body 3a provided with:
- two first blades 18, 19 for shearing the cable C and incising the outer sheath C1 covering the cable, as shown for instance in figs. 4 to 6; and
- two second blades 42, 43 for incising the sheaths F1 covering the wires F constituting the cable C to be seen in fig. 3.

According to the invention and with reference more particularly to figs. 4 and 5, the first blades 18, 19 consist of a couple of plates 21, 21 with planar surfaces 20a, 21a closely juxtaposed one to the other, each plate being provided with a cutting element 22, 23 defined by the sharp edge 24, 25 of a through hole 26, 27 made in each plate, said cable C to be shorn and stripped being inserted into said hole.

More particularly, one can see in fig. 4 that the sharp edge 24, 25 has a mixtilinear shape defining a first couple of convergent sides 24a, 25a radiused by a first arc 28, 29 and a second couple of convergent sides 24b, 25b opposite to the fist couple and radiused by a second arc 30, 31, where each second arc 30, 31 has a bending greater than the curve of the corresponding first arc 28, 29.

The convergent and radiused sides are linked two-by-two by parallel connecting sides 24c, 25c in such a way that the through hole 26, 27 has a closed mixtilinear profile symmetric relative to a longitudinal axis Y defined by each blade 18, 19 and coincident with the movement direction of both blades relative to the cable C arranged between them.

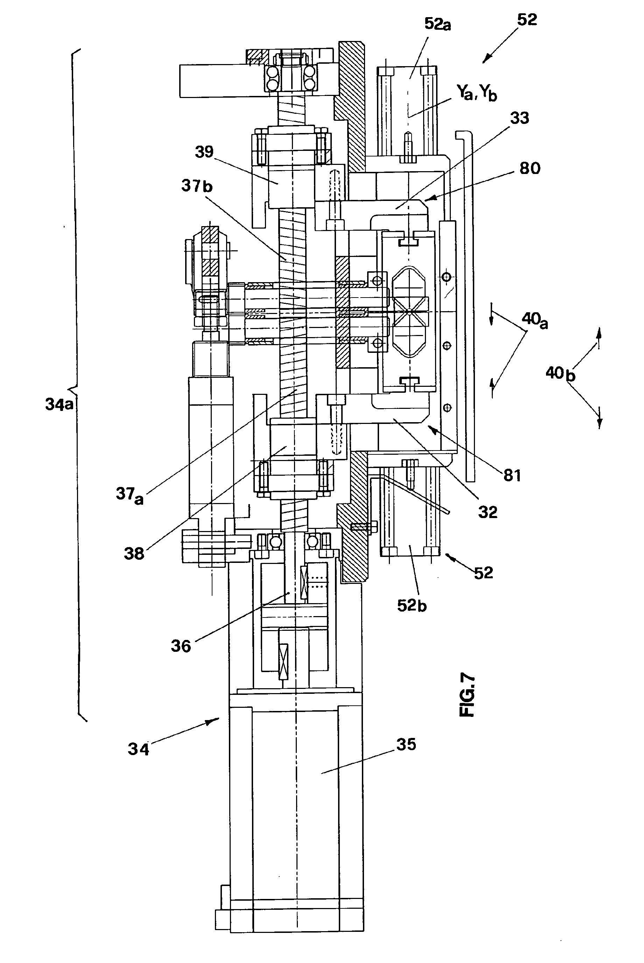

Each of said first blades 18, 19 is supported by the first blade holder 32, 33 respectively to be seen more particularly in fig. 7, each blade holder being in turn coupled to first driving means generally indicated with 34 for moving the blades 18, 19.

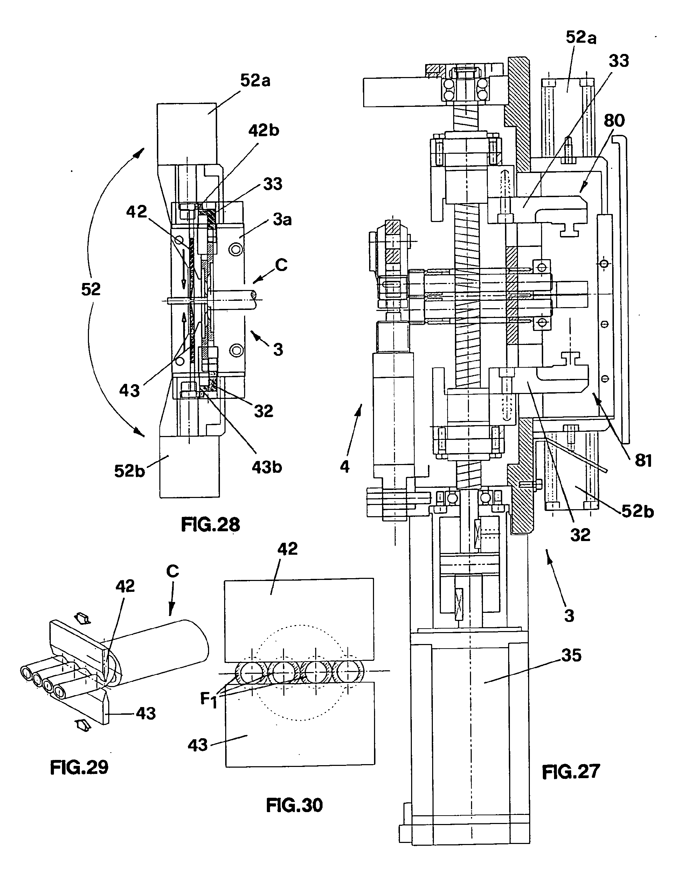

Also in fig. 7 one can see that the first driving means 34 comprise a brushless motor 35 with built in encoder whose driving shaft 36 is connected to a screw 37 having opposite left-hand and right-hand threads, 37a, 37b coupled with corresponding screw nuts 38, 39 to which adjustable stop means 80, 81 of the stroke of the second blades 42, 43 are associated and can be seen in fig. 27.

Therefore, the blades 18, 19 can move along the directions indicated by axes Ya, Yb in the opposite ways indicated by arrows 40a, 40b according to the rotation direction of motor 35.

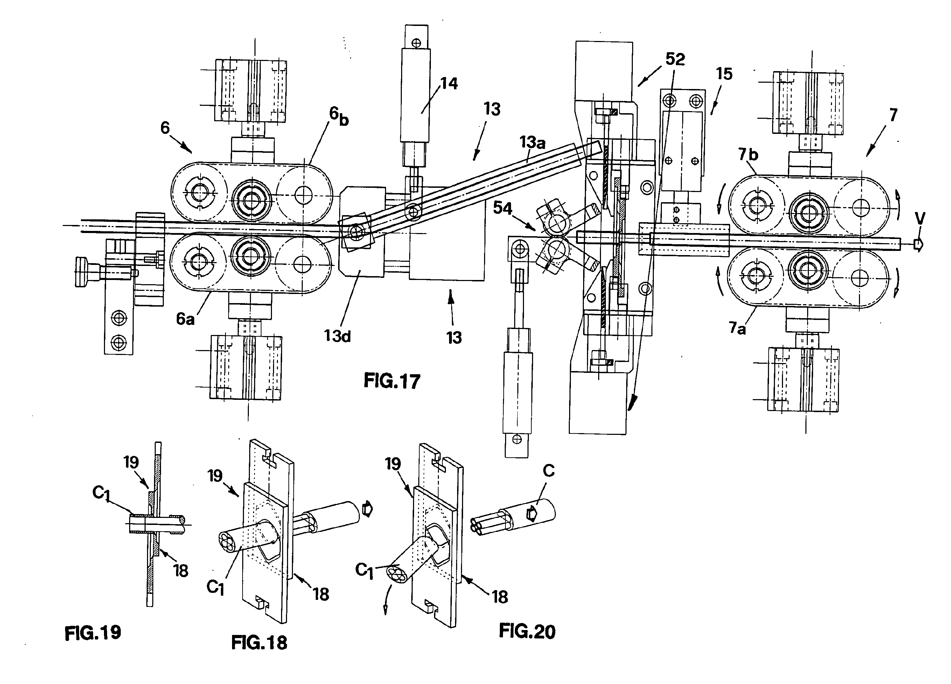

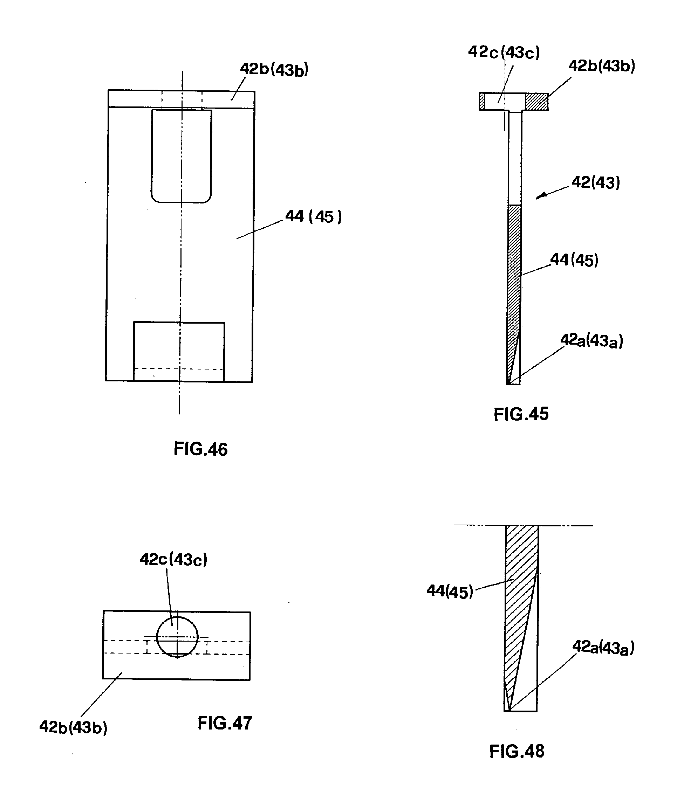

The adjustable means stop means 80, 81 of the stroke of the second blades 42, 43 are constituted by the same first blade holders 32, 33, each of them acting as a stop element for a corresponding shaped head 42b, 43b, belonging to each second blade 42, 43 to be seen in figs. 45 to 47 as will be described in more detail hereinafter. The second blades 42, 43 can be seen in detail in figs. 17, 21, 22, 28 and 31 and still in greater detail in figs. 45 to 48 where one can see that the blades consist of a couple of plates 44, 45 vertically aligned to each other and provided with opposite rectilinear cutting edges 42a, 43a for incising the sheaths F1 covering each wire F.

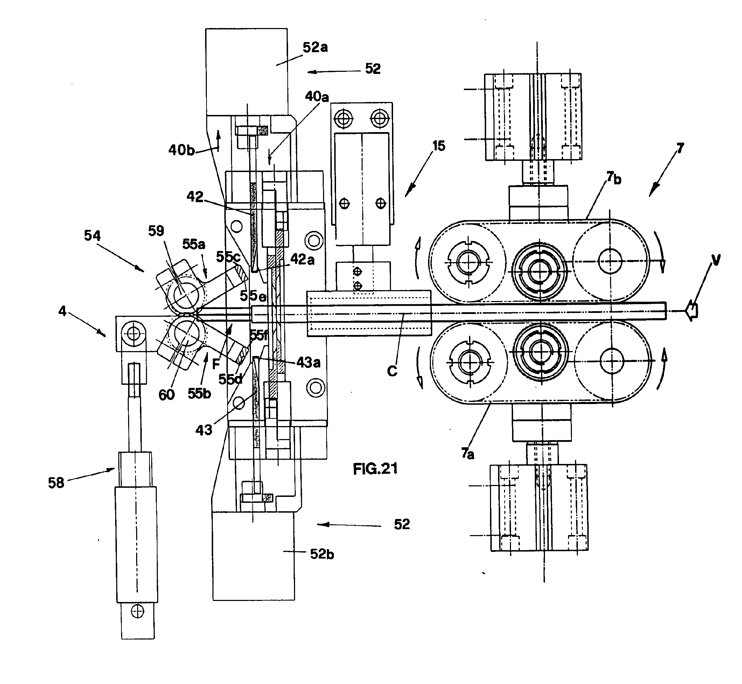

At the opposite part relative to the cutting edge, each second blade has the above mentioned shaped head 42b, 43b with a hole 42c, 43c for connection to second driving means 52 shown in fig. 21 adapted to move the blade in the same vertical direction of the first blades 18, 19 along the opposite ways indicated by arrows 40a or 40b.

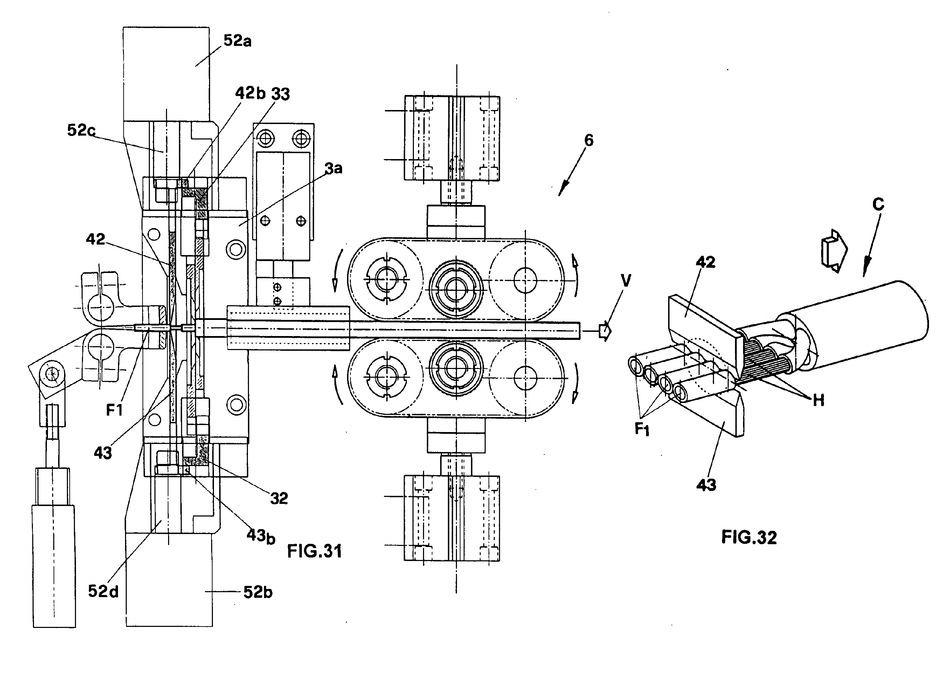

Said second driving means 52, as shown in fig. 31, consist of a couple of fluidic actuators 52a, 52b supported by the blade guiding body 3a and having the rods 52c, 52d each connected to a corresponding shaped head 42b, 43b of a second blade 42, 43.

With regard now to the alignment unit 4 for the wires F constituting the cable C, said unit is arranged upstream the shearing and stripping unit 3 as shown in fig. 21 and is provided with an aligning chuck 54 to place the wires F coplanar and juxtaposed to each other before incising their sheaths.

The aligning chuck comprises two aligning jaws 55a, 55b, each jaw being supported by a rotation pin 59, 60 supported by the machine casing 2.

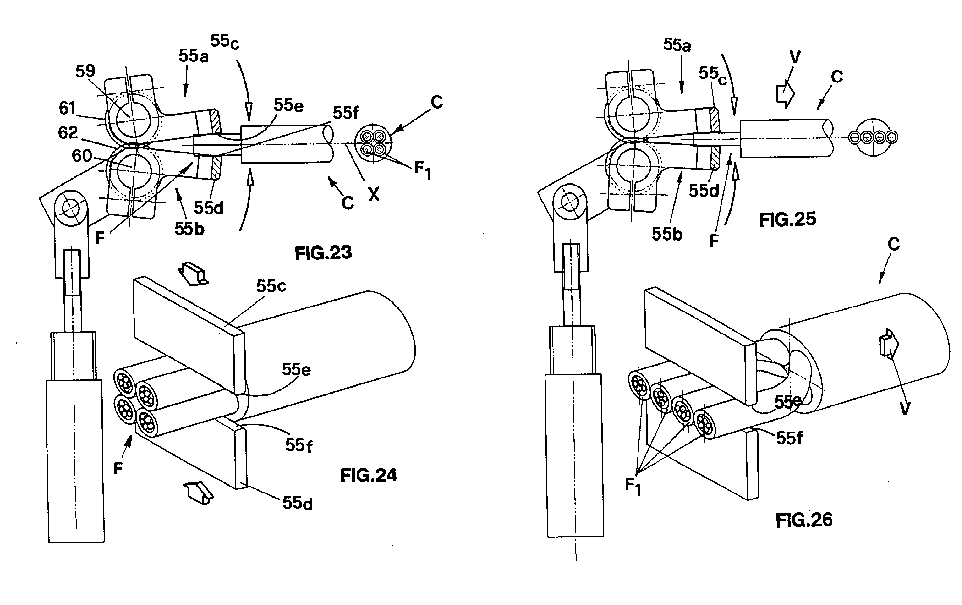

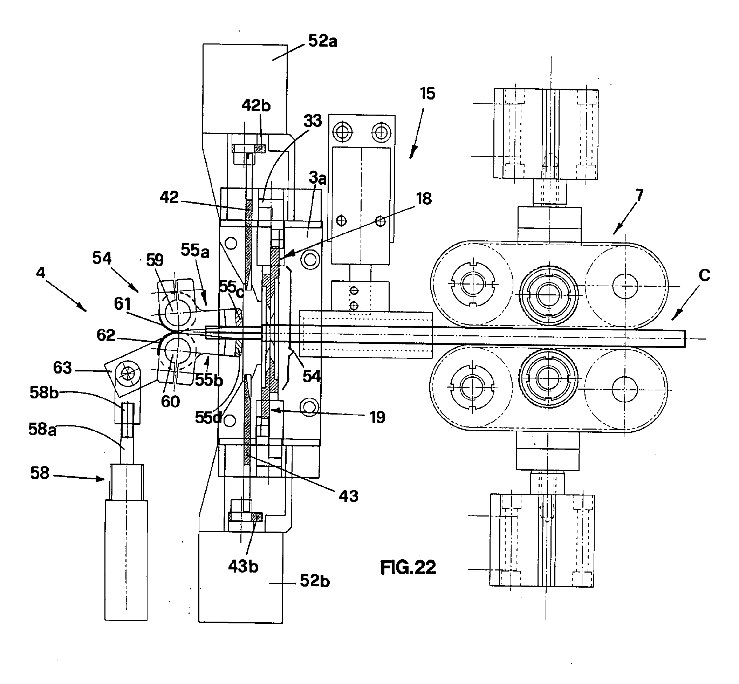

As shown in fig. 22 a pinion gear 61, 62 is associated to each of said rotation pins 59, 60 and one of said pins, for instance the lower rotation pin 60 is in its turn associated to third driving means through a connecting rod 63.

Said third driving means consist of a fluidic actuator 58 of commercial type available on the market, whose rod 58a has the end 58b pivoted to the connecting rod 63 for connection to the lower pin 60.

Movement of the rod 58a gives to the jaws 55a, 55b of the aligning chuck 54 opposite rotation movements around the corresponding pins 59, 60 because the pinion gears 61, 62 are mutually engaged and therefore the rotation given by the actuator 58 to the lower pin 60 is transmitted also to the upper pin 61.

Preferably but not necessarily the aligning jaws 55a, 55b as shown in figs. 23 and 24 comprise shaped blades 55c, 55d having opposite planar surfaces 55e, 55f in contact with the wires F constituting the cable C.

The jaws 55a, 55b, as shown more particularly in figs. 24 and 26, have the function to align the wires F juxtaposing them to each other on the same plane, before incising their sheaths F1 through the second blades 42, 43.

In this way a perfect incision of the sheaths by the second blades 42, 43 is warranted and the risk that the blades incise also the metal wire because of a misalignment of the wires F is prevented.

As to the position of the second blades 42, 43 and more particularly, penetration of their cutting edges 42a, 43a into the sheaths F1 of the wires F, such penetration is set through adjustable stop means generally indicated with 80, 81 and to be seen particularly in figs. 27 and 28, consisting of each first blade holder 33, 32 acting as stop for the corresponding shaped head 42b, 43b of a corresponding second blade 42, 43.

In such a way control of penetration of the cutting edges 42a, 43a of the second blades 42, 43 into the sheaths F1 occurs using the same first blade holder 33, 32 of the first blades 18, 19 and also the same electric motor 35 carrying out movement of the first blade holders 33, 32.

Indeed, the microprocessor unit 8 controlling rotation of the motor 34 allows to vary the vertical stroke of the second blades 42, 43 changing the position of the first blade holders 33, 32 and therefore the point of contact with the shaped heads 42b, 43b.

Consequently, it is possible to control penetration of the second blades 42, 43 into the sheaths F1 to be incised according to their thickness.

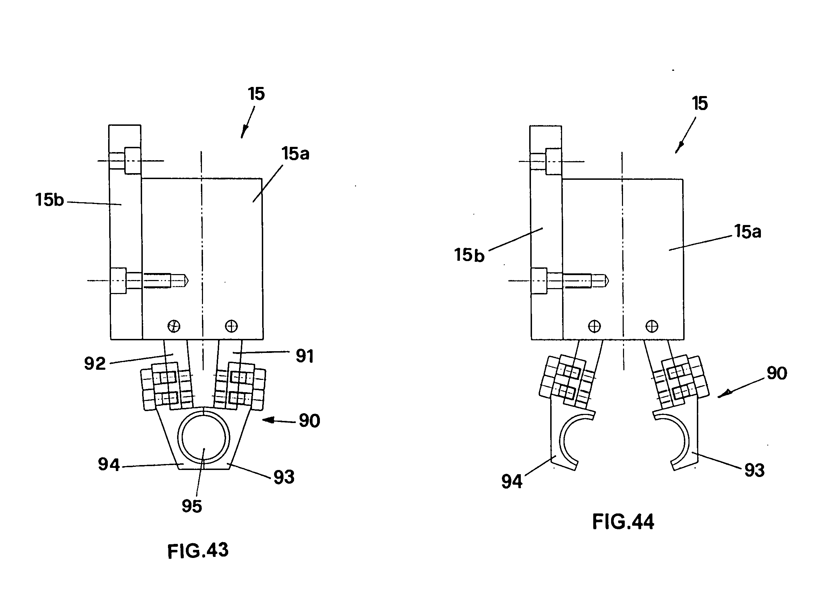

Finally, as to the outlet cable guide 15 shown in greater detail in figs. 43 and 44 illustrating its closed and open position respectively, it consists of an actuator 15a fixed through a connection flange 15b to the machine casing and controlling opening and closing of a gripping chuck generally indicated with 90 and consisting of a couple of jaw, 91, 92 with opposite shaped ends 93, 94. These ends when arranged in the closed position shown in fig. 43, define a hole 95 accomodating the cable C.

In operation the cable C to be shorn to size and stripped, is introduced at the cable guiding roller inlet 9 and is advanced along the direction indicated by arrow V by the driving units 6 and 7.

The gauging unit 10 detects the length of cable C set in the controlling and actuating microprocessor unit 8 and stops its advancement when reaching the desired shearing length.

This occurs when along the advancement direction V the desired length of cable is protruding from the shearing and stripping unit 3, said cable as shown in fig. 3 being arranged passing through the inlet cable guide 12, the intermediate cable guide 13, the aligning unit 4, the shearing and stripping unit 3, the outlet cable guide 15 and is comprised between the driving units 6 and 7.

In such a position as shown also in figs. 5 and 6, the cable C is centered inside the holes 26, 27 of the first shearing and stripping blades 18, 19 ready to undergo the shearing operation.

This operation occurs when the control and actuation unit 8 on the basis of a set program, actuates the motor 35 and moves the blades 18, 19 according to the opposite directions indicated by arrows 70, 71 in fig. 9, bringing them close to the cable along the movement axis Ya, Yb.

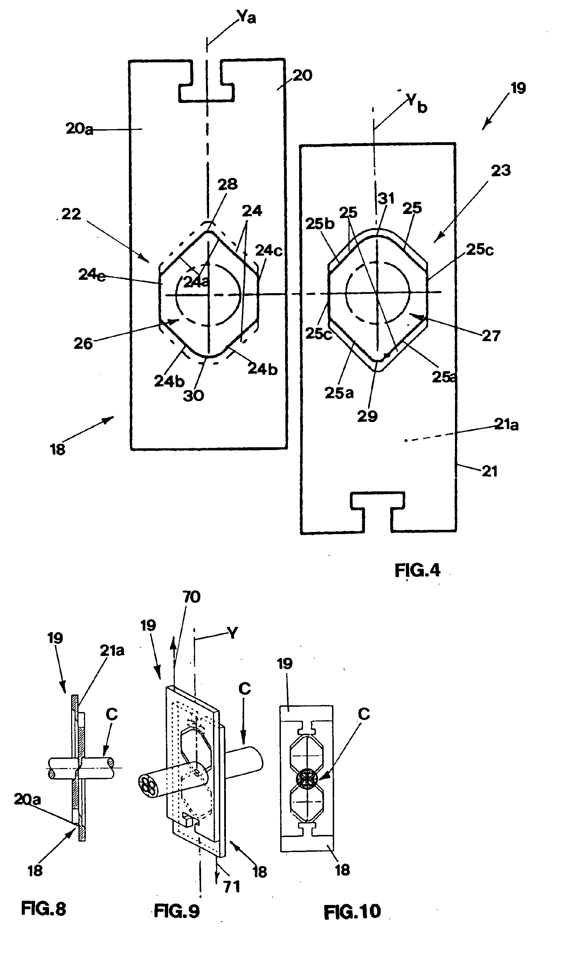

In such a way, as shown in fig. 10, the first couple of convergent sides 24a of blade 18 intersects the corresponding first couple of convergent sides 25a of blade 19 so as to shear the cable C.

At this point the intermediate cable guide 13 is lifted as shown in fig. 17 while the first blades 18, 19 invert their mutual movement to return to the configuration in which they allow passage of cable C between them.

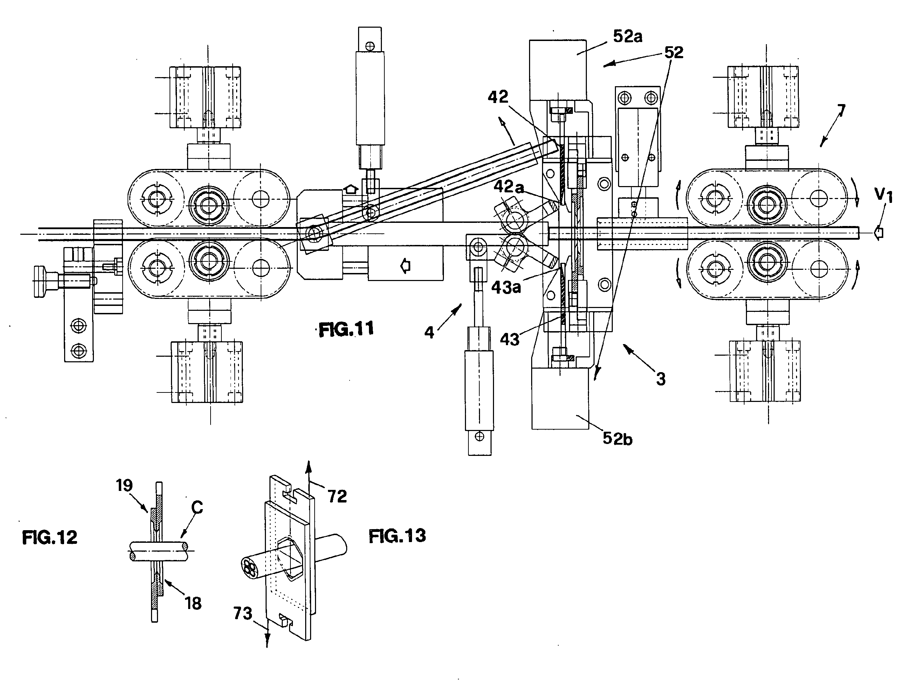

The cable is retracted in the direction indicated by arrow V1 in fig. 11 so as to place the cable end under the shearing and stripping unit 3 to carry out incision of the sheaths covering said cable.

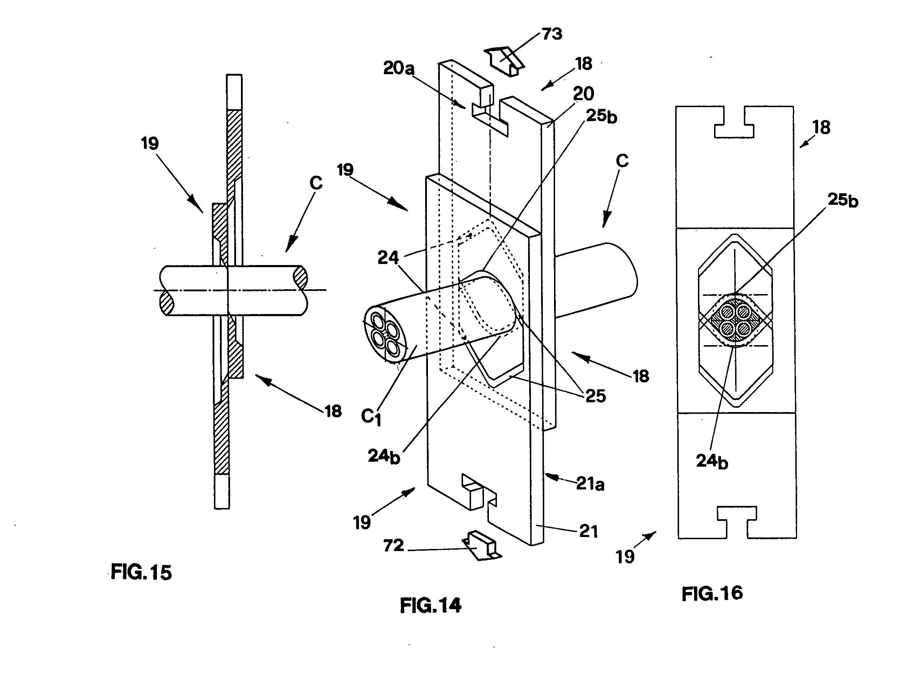

The blades 18, 19 are then moved along the opposite directions indicated by arrows 73, 72 of fig. 13 respectively, until they are arranged in the position shown in figs. 14 to 16 where one can see that the second couple of convergent sides 24b, 25b of each blade penetrates into the sheath C1 for an amount sufficient to incise it circumferentially.

The movements of the first blades 18, 19 in the direction of the arrows 72, 73 occur by inverting the direction of rotation of the motor 35 while regulation of depths of their penetration into the sheaths C1 occurs regulating through the microprocessor unit 8 the rotation of the motor 35 that causes the blades to advance for controlled quantities through the coupling consisting of screw 37 and screw nuts 38, 39 respectively.

At this point as shown in fig. 17, the second driving unit 7 inverts rotation of the conveyor belts 7a, 7b and advances the cable C again in the direction indicated by arrow V, so as to obtain separation of the sheath C1 by contrast against the first blades 18, 19 as shown more particularly in fig. 18, 19 and 20.

To proceed to stripping the wires F, the second driving unit 7, as shown in fig. 21, inverts again the rotation of the belts 7a, 7b so that the cable C is again retracted along the direction indicated by arrow V1 to place the wires F under the second cutting blades 42, 43 and the aligning jaws 54.

At this point a control imparted by the control and actuation unit 8 causes the aligning jaws 55a, 55b be lowered and arranged against the wires F in the position shown in fig. 22.

If the wires F are arranged in the superimposed position shown in fig. 24, by acting on the second driving unit 7 and inverting again the direction of rotation of the belts 7a, 7b, the cable C is again advanced along the direction indicated by arrow V in figs. 25 and 26 and pressure of the shaped plates 55c, 55d places the wires F on a single plane as shown just in fig. 26.

The self-centering effect of the opposite rotation motion of the aligning jaws 55a, 55b constituting the aligning chuck 54, warrants alignment of the wires F always on the same plane.

At this point by actuating the actuators 52a, 52b, the second blades, 42, 43 incise the sheaths F1 as shown in figs. 28, 29 and 30.

Their penetration into the sheaths F1 is regulated by the position of the contact elements of the shaped heads 42b, 43b of the second blades 42, 43 with the first blade holders 32, 33 imposed by the motor 35.

By inverting again rotation of belts 7a and 7b, the cable C, as shown in fig. 31, advances along the direction of arrow V, causing separation of the sheaths F1 of wires F by contrast against the second blades 42, 43 as shown also in the detail of fig. 32.

In this way the conductors H constituting each wire F of the cable C are uncovered.

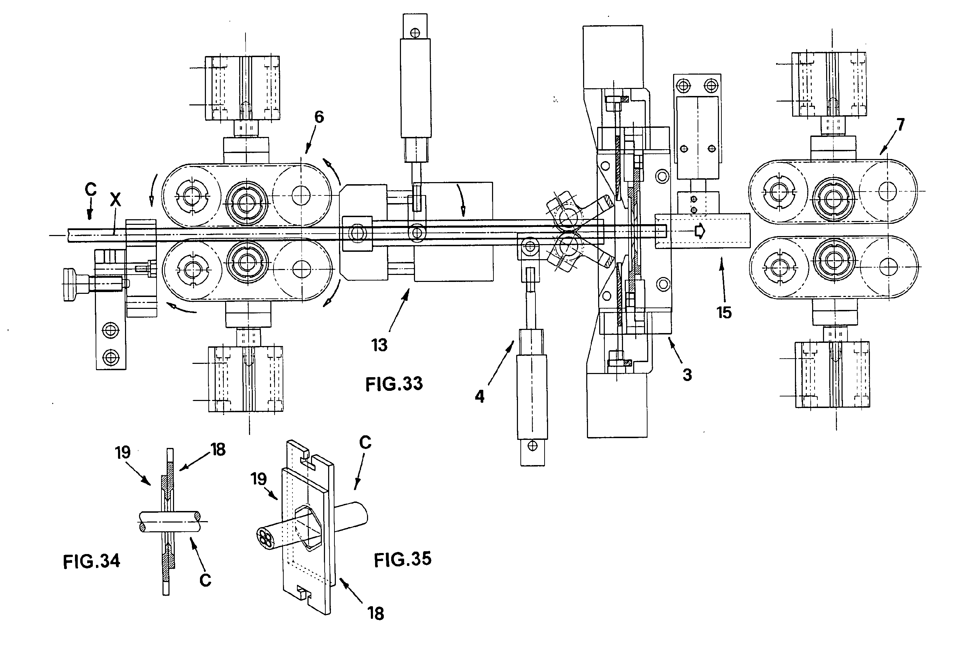

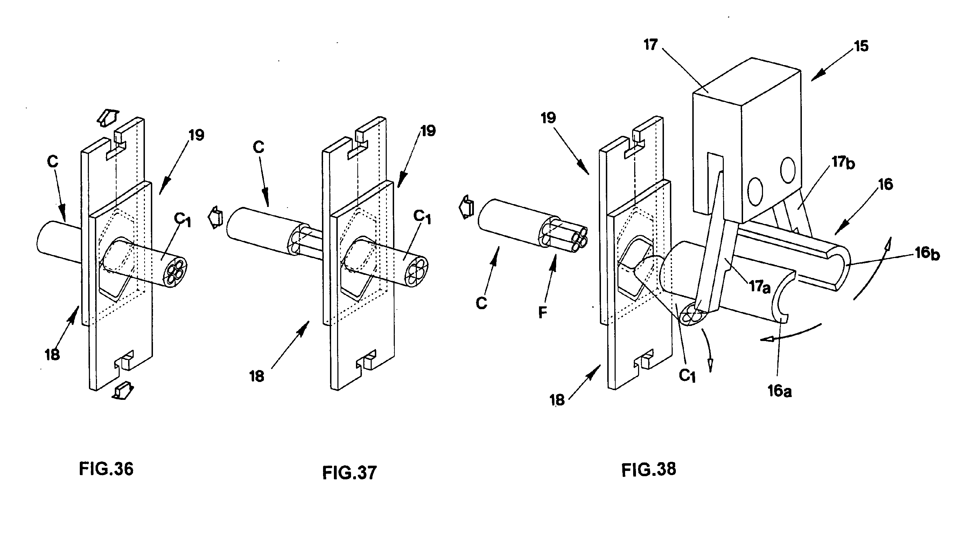

In order to proceed to strip the end of the cable C kept inside the intermediate cable guide 13, the cable guide is arranged aligned along axis X as shown in fig. 33 and through the driving unit 6 the cable C is advanced until the end to be shorn is placed under the action of the shearing and stripping unit 3. Proceeding exactly according to the same previously described sequence and starting from the configuration shown in figs. 34 and 35, through the movement of the first blades 18, 19 incision of the sheaths C1 of cable C is carried out as shown in fig. 36, followed by its stripping with separation of the sheath C1 a shown in fig. 37.

More particularly, one can see that if the sheath C1 separated from cable C has a length less than the distance D of fig. 1 between the shearing and stripping unit 3 and the second driving unit 7, the jaws 91, 92 defining the hole 95 gripping the cable C, are kept spaced from each other so that the sheath C1 falls by gravity.

On the contrary, when the length of the sheath C1 is greater than said distance D, the outlet cable guide 15 is kept with the jaws 91, 92 closed so as to guide the sheath C1 under the action of the belts 7a, 7b of the second driving unit 7 and remove said sheath when said belts are put in motion with the rotation direction 75 of fig. 31.

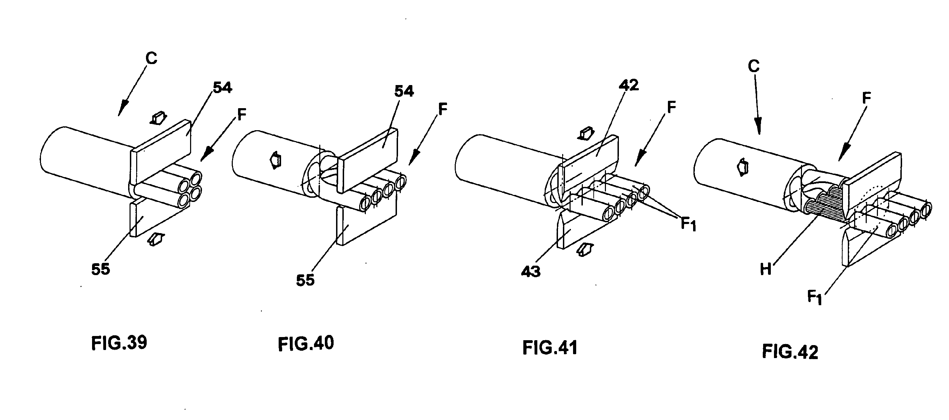

In order to adjust the wires F one proceeds in the previously described way, aligning the wires as shown in the details of figs. 39 and 42, incising their sheaths as shown in fig. 41 and then stripping them as shown in fig. 42.

In view of the foregoing one can understand that the described machine carries out the method of shearing and stripping electric cables and attains all the previously mentioned objects.

It is clear that in the executive stage many modification could be made to the method and the shearing stripping machine carrying out said method, that should be considered all covered by the present invention when falling within the scope of the appended claims.

## Claims

1. A method of shearing and stripping electric cables (C) comprising the following steps:
- arranging at least a cable (C) to be shorn and stripped inside a shearing-stripping unit 3;
- shearing said cable (C);
- incising the sheath (C1) covering said cable (C) at least one of the ends made by the shearing step;
- stripping said at least an end,
**characterised in that** shearing of said cable (C) and incision of said sheath (C1) are carried out by a single couple of first blades (18, 19) mutually movable in a direction transversal to said cable (C) along two parallel directions in opposite ways, said first blades carrying out a first movement to shear said cable and a second opposite movement to incise said sheath.

2. The method according to claim 1 comprising also the following steps:
- incising the sheath (F1) covering the wires (F) constituting said cable (C);
- and stripping the ends of said wires (F),
**characterised in that** the incision of said sheaths (F1) covering said wires (F) is carried out through second blades (42, 43) arranged on opposite sides of said wires (F) and movable according to opposite directions of approaching said wires.

3. The method according to claim 2) **characterised in that** the incision of said sheath (F1) covering said wires (F) follows an aligning operation to place said wires (F) juxtaposed and coplanar to each other.

4. A shearing-stripping machine (1) to carry out the method according to claim 3) comprising a casing (2) on which the following elements are mounted:
- driving means (5) to advance said cables (C) to be shorn and stripped;
- at least a shearing and stripping unit (3) comprising a blade guiding body (3a) provided with first blades (18, 19) supported by first blade holders (32, 33) for shearing the cable (C), incising the sheath (C1) and stripping said cable (C) and second blades (42, 43) for incising the sheath (F1) of wires (F) constituting said cable (C) and stripping said wires (F);
- at least an aligning unit (4) adapted to place said wires (F) juxtaposed and coplanar to each other before incision of said sheaths (F1) by said second blades (42, 43); first driving means (34) for moving said first blades (18, 19); second driving means (52) for moving said second blades (42, 43);
- at least a control and actuation microprocessor unit (8) for said driving means (34, 52) and said driving units (6, 7),
**characterised in that** said first blades (18, 19) comprise a couple of plates (20, 21) with planar surfaces (20a, 21a) juxtaposed one close to the other, each plate (20, 21) being provided with a cutting member (22, 23) defined by the sharp edge (24, 25) of a through hole (26, 27) made in each plate, in which said cable (C) to be shorn and stripped is inserted.

5. The machine (1) according to claim 4) **characterised in that** said sharp edge (24, 25) of said through hole (26, 27) of each plate (20, 21) has a mixtilinear shape defining:
- a first couple of convergent sides (24a, 25a) radiused through a first arc (28, 29);
- a second couple of convergent sides (24b, 25b) opposite to the preceding sides and radiused through a second arc (30, 31) having a bending greater than the curve of said first arc (28, 29), said couples of convergent sides being connected to each other at the ends by connecting sides (24c, 25c) parallel to each other.

6. The machine (1) according to claim 5) **characterised in that** said first couple of convergent sides (24a, 25a), said second couple of convergent sides (24b, 25b), said connecting sides (24c, 25c), said first arc (28, 29) and said second arc (30, 31) define a generally hexagonal and symmetric profile relative to a longitudinal axis (Ya, Yb) defined by each plate (20, 21) and coincident with the direction of movement of said plate.

7. The machine (1) according to claim 4) **characterised in that** said first driving means (34) comprise a single motor (35) whose driving shaft (36) is connected to a screw (37) having opposite right-hand (37b) and left-hand (37a) threads coupled with corresponding screw nuts (39, 38) to which adjustable stop means (80, 81) of the stroke of said second blades (42,43) are associated.

8. The machine (1) according to claim 7) **characterised in that** said adjustable stop means (80, 81) of the stroke of said second blades (42, 43) consist of said first blade holders (32, 33), each of said blade holders co-operating by contact with a corresponding shaped head (42b, 43b) provided in each of said second blades (42, 43).

9. The machine (1) according to claim 4) **characterised in that** said at least an alignment unit (4) is arranged relative to the advancement direction (V) of said cables (C) to the outlet of the machine, upstream said at least a shearing and stripping unit (3) and comprises at least an aligning chuck (54) provided with a couple of aligning jaws (55a, 55b) opposite to each other and arranged upstream said second blades (42, 43).

10. The machine (1) according to claim 9) **characterised in that** said aligning jaws (55a, 55b) are supported by corresponding rotation pins (59, 60) co-operating with each others through pinion gears (61, 62) mutually engaged and coaxial to said pins.

11. The machine (1) according to claim 10) **characterised in that** at least one (60) of said pins is drivingly connected to third driving means (58) adapted to rotate said pin.

12. The machine (1) according to claim 10) **characterised in that** said aligning jaws (55a, 55b) are provided with opposite shaped plates (55c, 55d) having planar surfaces (55e, 55f) adapted to be put in contact at the opposite sides with the wires (F) forming said cable (C).

13. The machine (1) according to claim 4) **characterised in that** said second driving means (52) comprise pneumatic actuators (52a, 52b) each connected to one of said second blades (42, 43) and both supported by said blade guiding body (3a).

14. The machine (1) according to claim 4) **characterised in that** said second blades (42, 43) are arranged on opposite sides relative to said cable (C) and are end aligned and opposite at their side in which a rectilinear sharp edge (42a, 43a) is made.

15. The machine (1) according to claim 4) **characterised in that** said driving means (5) for said cable (C) comprise a first driving unit (6) arranged upstream said aligning unit (4) and a second driving unit (7) arranged downstream said shearing and stripping unit (3), said driving units (6, 7) being adapted to advance said cable (C) along generally rectilinear directions (V, V1).

16. The machine (1) according to claim 15) **characterised in that** each of said driving units (6, 7) comprise a couple of superimposed conveyor belts (6a, 6b; 7a, 7b), between which said cable (C) is arranged adhering to both belts, each of said belts being arranged as a closed loop between at least a couple of rollers (6c, 6d; 7c, 7d), at least one of said rollers being rotated by driving means.

17. The machine (1) according to claim 16) **characterised in that** each of said conveyor belts (6a, 6b; 7a, 7b) is associated to actuating means (6e, 6f; 7e, 7f) co-operating with regulating means (6g, 7g) to be manipulated by the operator and adapted to change the distance between said belts as a function of the diameter of said cable (C).

18. The machine (1) according to claim 15) **characterised in that** a cable guide roller inlet (9) is arranged upstream said first driving unit (6).

19. The machine (1) according to claim 18) **characterised in that** a gauging unit (10) measuring the length of said cable (C) is arranged between said cable guide roller inlet (9) and said first driving unit (6).

20. The machine (1) according to claim 19) **characterised in that** said gauging unit (10) comprises an encoder (10a) provided with a pressure roller (10b).

21. The machine (1) according to claim 19) **characterised in that** an inlet cable guide (12) is arranged downstream said gauging unit (10) and upstream said first driving unit (6).

22. The machine (1) according to claim 15) **characterised in that** an intermediate cable guide (13) is arranged between said first driving unit (6) and said alignment unit (4).

23. The machine (1) according to claim 22) **characterised in that** said intermediate cable guide (13) comprises a tubular member (13a) having an end (13b) pivoted through a pin (13c) to the movable member (13d) of a first actuator (13e) fixed to the casing (2) of said machine.

24. The machine (1) according to claim 15) **characterised in that** an outlet cable guide (15) is arranged downstream said shearing and stripping unit (3) and upstream said second driving unit (7).

25. The machine (1) according to claim 24) **characterised in that** said outlet cable guide (15) comprises an actuator (15a) fixed to the casing (2) of said machine (1) and provided with a gripping chuck (90).

26. The machine (1) according to claim 25) **characterised in that** said gripping chuck (90) comprises a couple of jaws (91, 92) opposite to each other and mutually movable one to the other with a scissors like motion, said jaws (91, 92) having shaped ends (93, 94) defining a hole (95) adapted to receive said cable (C) when they are mutually opposed.
